# EUROPÄISCHE PATENTSCHRIFT

(11) **EP 1 202 889 B1**
(45) Veröffentlichungstag und Bekanntmachung des Hinweises auf die Patenterteilung: **26.09.2007**
(21) Anmeldenummer: 00951412.6
(22) Anmeldetag: 20.07.2000
(51) Int. Cl.: B60T 8/00

(54) **VERFAHREN UND SCHALTUNGSANORDNUNG ZUR FAHRZEUGREGELUNG**
METHOD AND CIRCUIT FOR CONTROLLING A VEHICLE
PROCEDE ET CIRCUIT DE REGULATION D'UN VEHICULE

(30) Priorität: 21.07.1999 DE 19933387; 25.04.2000 DE 10020215
(43) Veröffentlichungstag der Anmeldung: 08.05.2002
(73) Patentinhaber: Continental Teves AG & Co. oHG, 60488 Frankfurt am Main (DE)
(72) Erfinder: EHMER, Norbert, D-65760 Eschborn (DE); KLUSEMANN, Rainer, D-60529 Frankfurt/M. (DE); KIENLE, Lothar, D-68623 Lampertheim (DE); HARTMANN, Bernd-Uwe, D-63584 Gründau (DE); STÖCKMANN, Ulrich, D-64289 Darmstadt (DE)
(86) Internationale Anmeldenummer: PCT/EP2000/006955
(87) Internationale Veröffentlichungsnummer: WO 2001/007306

(56) Entgegenhaltungen:
- EP-A- 0 764 569
- EP-A- 0 780 275
- DE-A- 4 239 177
- DE-A- 19 705 948
- DE-C- 4 418 769

## Beschreibung

Die Erfindung bezieht sich auf ein Verfahren und eine Schaltungsanordnung zur Fahrzeugregelung, bei dem das Drehverhalten der einzelnen Räder gemessen und zur Ermittlung der Fahrzeugreferenzgeschwindigkeit, des Radschlupfs, der Radbeschleunigung und anderer Regelgrößen ausgewertet wird. Diese Größen dienen zur Bemessung und/oder Modulation des Bremsdrucks in den Radbremsen der geregelten Räder und/oder eines Eingriffs in das Motormanagement.

Aus der DE 197 05 948 A1 ist ein Verfahren zum Dämpfen von Antriebsstrangschwingungen bekannt, bei welchem nach Erkennen von kritischen Schwingungen an einem Antriebsrad die Bremsdruckregelung dieses Rades für eine bestimmte Zeitspanne auf eine Sonderregelung, die die Schwingungsdämpfung bewirkt, umgeschaltet wird.

Die Verfahren zur Fahrzeugregelung haben die Aufgabe, das Fahrzeug in kritischen Situationen zu stabilisieren und die Lenkbarkeit zu erhalten. Sie sind in Systeme zur Fahrzeugeregelung, wie Antiblockiersystem (ABS), Antriebsschlupfregelung (ASR) oder Fahrdynamikregelung (ESP), eingebunden. Durch ABS wird ein Blockieren der Räder beim Bremsen verhindert. ESP als Gesamtsystem oder übergeordnetes System gewährleistet, daß das Fahrzeug insbesondere in einer Kurve nicht instabil wird und seitlich nicht ausbricht.

Mit Hilfe der ASR wird durch den Aufbau von Bremsdruck an überdrehenden Antriebsrädern der Radschlupf auf ein für die Gewährleistung der Traktion und der Fahrstabilität notwendigen Wert reduziert. Dieses System existiert sowohl für zweiradgetriebene als auch für allradgetriebene Fahrzeuge. Außer der Bezeichnung ASR sind sind für diese Regelungen die Bezeichnungen "Elektronische Differentialsperre (EDS)", "Antriebssschlupf Kontrolle bzw. Traktion (ASC bzw. ASC+T)" oder "Traction Control System (TCS)" gebräuchlich. Es sind zwei Ausführungen zu unterscheiden: ASR und Bremsen-ASR oder Bremsen-TCS . ASR drosselt in bestimmten Situationen durch einen Eingriff in das Motormanagement zusätzlich das Motordrehmoment, um die Belastung der Bremsen so gering wie möglich zu halten. Bremsen-ASR wirkt ausschließlich über einen automatischen Bremseneingriff. Im folgenden sind mit der Bezeichnung "ASR" alle denkbaren Antriebsschlupfgregelungen, also solche mit und ohne Eingriff in das Motormanagement gemeint.

Zur Verbesserung des Regelverhaltens ist es bereits bekannt, die Schwingungen des Antriebsstranges zu erfassen und die Druckmodulation beispielsweise in einer aktiven ABS-Regelung oder einer aktiven ASR-Regelung in der Weise zu verändern, daß die Radschwingungen nicht zusätzlich vergrößert werden, sondern die Radschwingungen durch eine entsprechende gegenphasige Druckmodulation des Bremsdrucks in den Radbremsen vielmehr gedämpft werden. Voraussetzung für diese Verfahren ist es, die Oszillationen des Antriebstranges und dessen Resonanzfrequenz zu erkennen.

Die Auslegung der Fahrzeugregelsysteme erfolgt dabei im Grunde für den durch weitgehend ebenen Untergrund und zumindest seitenweise annähernd gleichen Reibwert gekennzeichneten Straßeneinsatz. Ein besonderes Problem bei der Fahrzeugregelung stellt aber eine Fahrsituation auf einer Schotterfahrbahn oder einer ähnlichen Fahrbahn mit einem erhöhten Schlupfbedarf dar.

Aufgabe der Erfindung ist es daher, ein Verfahren und eine Schaltungsanordnung zum Erkennen einer Schotterfahrbahn oder einer ähnlichen Fahrbahn mit einem erhöhten Schlupfbedarf bereitzustellen.

Die Aufgabe wird erfindungsgemäß durch ein Verfahren gelöst, welches dadurch gekennzeichnet ist, daß zum Erkennen einer Schotterfahrbahn mit einem erhöhten Schlupfbedarf das Schwingungsverhalten mindestens zweier angetriebener Räder Achse erfaßt und ausgewertet wird und daß die Fahrsituation einer Schotterfahrbahn dann als erkannt gilt und/oder eine entsprechende Regelungsfunktion der Fahrzeugregelung nur dann in Funktion gesetzt wird, wenn die Radbeschleunigung an mindestens zwei angetriebene Rädern einen vorgegebenen Radbeschleunigungs-Grenzwert übersteigt und wenn die mindestens zwei angetriebenen Räder ein bestimmtes Schwingungsverhalten aufweisen.

Gemäß der Erfindung sind unter dem Begriff "Schotterfahrbahn" die Fahrbahnen zu verstehen, die durch Fahrbahnunebenheiten und losen Untergrund gekennzeichnet sind.

Eine derartige Fahrbahnbeschaffenheit hat einen erhöhten Schlupfbedarf zur Folge, wobei der Begriff "erhöhter Schlupfbedarf" im Sinn der Erfindung bedeutet, daß die Längskraft (Kraft in Umfangsrichtung des Reifens zur Übertragung der Antriebskräfte und im Fall eines Bremsvorgangs der Bremskräfte) ihr Maximum bei höheren Radschlupf-Werten hat. Der Schlupfbedarf einer Schotterfahrbahn liegt sogar noch über dem Schlupfbedarf für festgefahrenen Schnee.

Beim erfindungsgemäßen Verfahren zur Fahrzeugregelung ist es wesentlich, daß neben dem Erfassen des Raddrehverhaltens auch das Schwingungsverhalten mindesten, zweier angetriebener Räder erfaßt und ausgewertet wird. Die Fahrsituation einer Schotter fahrbahn gilt dann als erkannt und/oder eine entsprechende Regelungsfunktion der Fahrzeugregelung wird nur dann in Funktion gesetzt, wenn die Radbeschleunigung größer ist als ein vorbestimmter Grenzwert und wenn die Räder ein bestimmtes Schwingungsverhalten aufweisen. Daß bedeutet, wenn bestimmte Schwingungsbedingungen erfüllt sind, die charakteristisch für eine Schotterfahrbahn sind.

Nach der Erfindung wird als Radbeschleunigungs-Grenzwert vorzugsweise ein Wert in einem Bereich von 1 g bis 2 g, insbesondere ca. 1,5, vorgegeben.

Erfindungsgemäß gilt als eine Voraussetzung für das Erkennen einer Schotterfahrbahn das Erfassen einer vorgegebenen Periodendauer der Schwingungen an mindestens zwei angetriebenen Rädern, die innerhalb eines vorgegebenen Periodendauer-Bereichs, vorzugsweise innerhalb eines Bereichs von 30 msec. bis 150 msec., liegt oder das Erfassen einer vorgegebenen Periodendauer der Schwingungen an mindestens zwei angetriebenen Rädern, die einen vorgegebenen Grenzwert, vorzugsweise ca. 50 msec., erreicht.

Die Periodendauer der Schwingungen wird vorteilhaft über einen bestimmten Zeitraum erfaßt, um eine Periodendauer sicher zu erkennen. Der Zeitraum beträgt vorzugsweise 30 msec. bis 150 msec., insbesondere ca. 50 msec. Daß bedeutet, im allgemeinen ist das Erfassen einer Schwingungsperiode ausreichend für das Erkennen einer Schotterfahrbahn.

Es ist nach der Erfindung vorgesehen, daß eine Schotterfahrbahn dann als erkannt gilt und/oder eine entsprechende Regelungsfunktion der Fahrzeugregelung nur dann in Funktion gesetzt wird, wenn die angetriebenen Räder einen vorgegebenen Antriebsschlupf, insbesondere ein Antriebsschlupf in einem Bereich von 0 km/h bis 50 km/h aufweisen.

Bei dem Verfahren gilt eine Schotterfahrbahn erfindungsgemäß dann als erkannt und/oder eine entsprechende Regelungsfunktion der Fahrzeugregelung wird nur dann in Funktion gesetzt, wenn die berechnete oder geschätzte Fahrzeugreferenzgeschwindigkeit einen vorgegebenen Fahrzeuggeschwindigkeits-Grenzwert unterschreitet, der vorteilhaft in einem Bereich von 60 km/h bis 100 km/h liegt und vorzugsweise ca. 80 km/h beträgt.

Nach der Erfindung gilt eine Schotterfahrbahn dann als erkannt und/oder eine entsprechende Regelungsfunktion der Fahrzeugregelung wird nur dann in Funktion gesetzt, wenn bei einem Fahrzeug mit Allradantrieb die vorgenannten Bedingungen für eine Schotterfahrbahn für die beiden Räder einer Fahrzeugseite und/oder einer Fahrzeugachse erkannt wurden oder wenn bei einem Fahrzeug mit einer angetriebene Achse für beide Räder der angetriebenen Achse die vorgenannten Bedingungen für eine Schotterfahrbahn Bedingungen erkannt wurden.

Der Begriff "Fahrzeuge mit Allradantrieb" umfaßt im Sinne der Erfindung sowohl Fahrzeuge mit permanent mindestens vier angetriebenen Rädern an mindestens zwei angetriebenen Achsen, als auch primär mit einer Achse angetriebene Fahrzeuge, bei denen eine zweite Achse im Bedarfsfall zusätzlich hinzugeschaltet werden kann. Dies kann manuell oder automatisch, zum Beispiel mit Hilfe einer Viscokupplung erfolgen.

Nach einem Erkennen einer Schotterfahrbahn, insbesondere gemäß dem zuvor beschriebenen Verfahren, wird erfindungsgemäß eine Motorregelungsschwelle erhöht auf vorzugsweise einen Wert in einem Bereich von 2 km/h bis 10 km/h, besonders bevorzugt ca. 3 km/h, und/oder eine Bremsenregelungsschwelle wird erhöht, vorzugsweise auf einen vorgegebenen Wert in einem Bereich von 0 km/h bis 10 km/h, besonders vorteilhaft ca. 3 km/h.

Der Begriff "Motorregelungsschwelle" bedeutet hier der zum Erzielen eines bestmöglichen Kompromisses aus Traktion und Fahrstabilität von dem Motorregier, insbesondere TCS-Motorregler, einzustellende Radschlupf. Unter dem Begriff "Bremsenregelungsschwelle" ist im Sinne der Erfindung der zum Erzielen eines bestmöglichen Kompromisses aus Traktion und Fahrstabilität von dem Bremsenregler, insbesondere TCS-Bremsenregler, einzustellende Radschlupf zu verstehen.

Erfindungsgemäß erfolgt die Anhebung der Bremsenregelungsschwelle nur dann, wenn bestimmte Fahrsituationen erkannt werden, beispielsweise stark überdrehende Räder, zum Beispiel im Gelände bei großen Radlastschwankungen oder bei µ-Split Verhältnissen.

Die zugrunde liegende Aufgabe wird ferner durch eine Schaltungsanordnung zur Fahrzeugregelung nach Anspruch 14 gelöst.

Die Erfassungschaltung weist vorzugsweise Komparatoren für die Radbeschleunigung sowie Extremwertdetektoren auf, um das Schwingungsverhaltens der einzelnen Räder zu erfassen.

Nach einer erfindungsgemäßen Ausgestaltung ist die Schaltungsanordnung dadurch gekennzeichnet, daß der Erkennungsschaltung eine Ermittlungsschaltung zugeordnet ist, für die Ermittlung einer Fahrzeugreferenzgeschwindigkeit anhand gemessener Werte, deren Ausgang mit einem Eingang eines ersten Vergleichers verbunden ist, der dazu dient, die ermittelte Fahrzeugreferenzgeschwindigkeit mit einem vorbestimmten Grenzwert zu vergleichen und welcher erste Vergleicher über einen Ausgang mit einem Eingang der Auswertungsschaltung verbunden ist, die das erfaßte Schwingungsverhalten der einzelnen Räder, insbesondere die Periodendauer einer Schwingung, vergleicht mit vorgegebenen Grenzwerten, daß die Erkennungsschaltung einen zweiten Vergleicher zum Vergleichen der Radbeschleunigung mit einem Radbeschleunigungs-Grenzwert, einen dritten Vergleicher zum Vergleichen des Schwingungsverhaltens der einzelnen Räder untereinander, und einen vierten Vergleicher zum Vergleichen des Antriebsschlupfes der Räder mit einem vorgegebenen Grenzwert aufweist, und daß der Signalerzeuger über einen Ausgang mit einem Eingang mit einer Einrichtung verbunden ist, mit deren Hilfe bei einem entsprechenden Signal für die erkannte Fahrsituation einer Schotterfahrbahn einen Eingriff in die Bremsenregelung und/oder Motorregelung vornehmbar ist.

Die Erfindung soll im folgenden anhand von zwei Flußdiagrammen (Fig. 1 und Fig. 2) und einem Blockschaltbild (Fig. 3) beispielhaft näher erläutert werden.

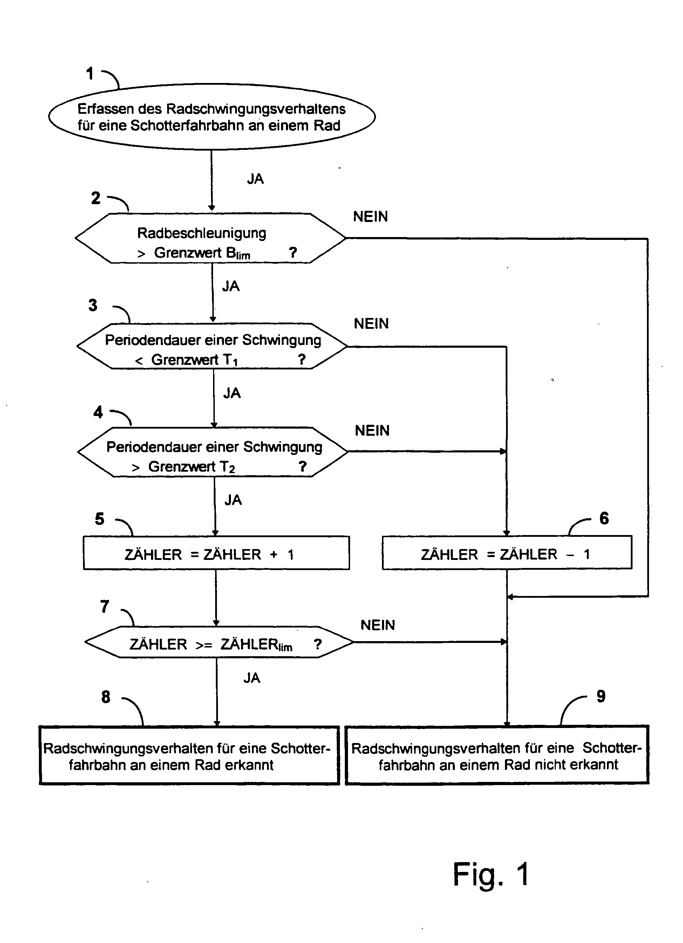

Fig. 1 zeigt ein Flußdiagramm einer erfindungsgemäßen Ausführungsform des Verfahrens zum Erfassen des Radschwingungsverhaltens für eine Schotterfahrbahn an einem Rad.

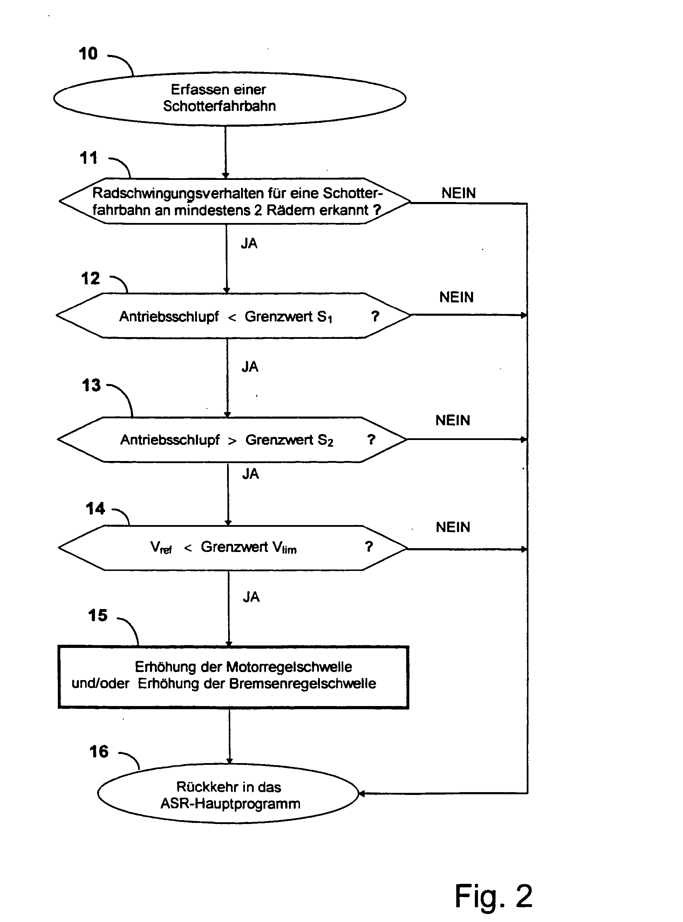

Fig. 2 zeigt ein Flußdiagramm einer erfindungsgemäßen Ausführungsform des Verfahrens zum Erfassen einer Schotterfahrbahn.

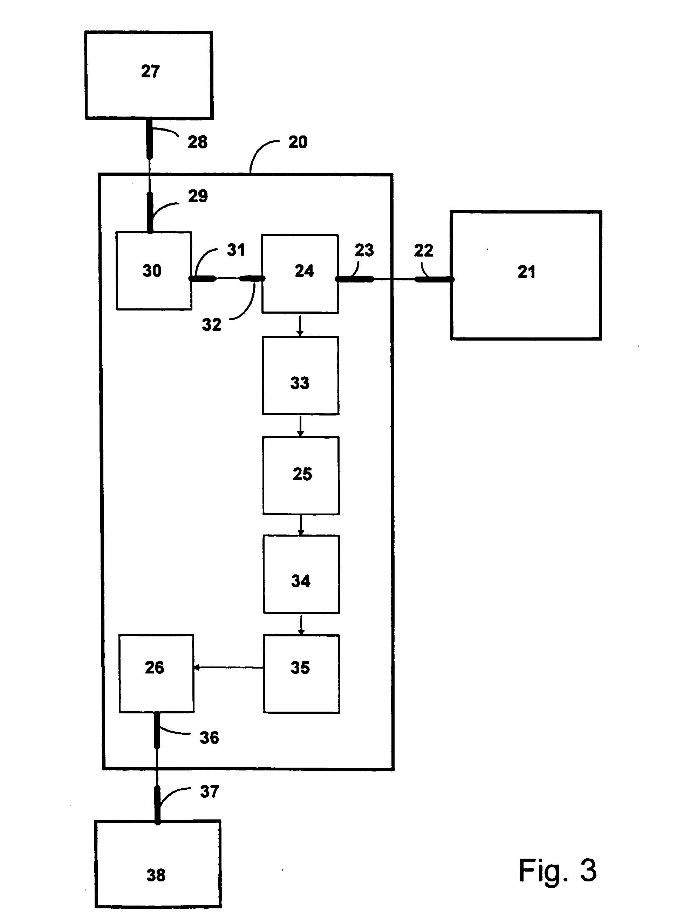

In Fig. 3 ist ein Blockschaltbild einer erfindungsgemäßen Ausführungsform der Schaltungsanordnung zum Erfassen einer Schotterfahrbahn gezeigt.

In Fig. 1 wird hier eingangs nach dem Start (Schritt 1) als eine grundsätzliche Bedingung für das Erfassen des Schwingungsverhaltens für eine Schotterfahrbahn an einem Rad mit der Abfrage 2 eine Radbeschleunigung gefordert, die oberhalb eines Radbeschleunigungs-Grenzwerts (Bₗᵢₘ). beispielsweise oberhalb 1 g, liegt. Dann wird das Schwingungsverhalten der einzelnen Räder auf ein bestimmtes, für eine Schotterfahrbahn charakteristisches Schwingungsverhalten überprüft. Dazu wird -bei einem Überschreiten des Radbeschleunigungs-Grenzwerts (Bₗᵢₘ) - die Zeitdauer zwischen den Maxima einer Schwingungsperiode ermittelt und in den Abfrageschritten 3 und 4 überprüft, ob die Periodendauer der Schwingungen an dem Rad innerhalb eines vorgegebenen Periodendauer-Bereichs liegt, der durch einen oberen Grenzwert (T₁) (Schritt 3) und einen unteren Grenzwert (T₂) (Schritt 4) definiert ist. Das durch den oberen Grenzwert (T₁) und unteren Grenzwert (T₂) definierte Intervall wird in Anhängigkeit von der Dynamik und dem Schwingungsverhalten des Antriebsstranges des Fahrzeugs und der zu detektierenden Fahrbahn festgelegt. Sind diese Bedingungen erfüllt, wird ein dem betrachteten Rad zugeordneter Integrator in einem vorgegebenen Zeitraum inkrementiert. Dazu wird in einem Schritt 5 ein dem betreffenden Rad zugeordneter Zähler jeweils um 1 erhöht. Trifft dies nicht zu, so wird in dem Schritt 6 der Zähler jeweils um 1 erniedrigt. Der Wert kann so bis zum Wert Null (0) dekrementiert werden. Überschreitet andererseits der Zähler einen Schwellwert (ZÄHLERₗᵢₘ) (Schritt 7), so sind für das betroffene Rad die Bedingungen einer Schotterfahrbahn erkannt (Schritt 8). Im anderen Fall, wenn die Bedingungen der Schritte 2 oder 3 oder 4 oder 7 nicht erfüllt wurden, gelten die Schwingungsbedingungen für eine Schotterfahrbahn an dem Rad als nicht erkannt (Schritt 9).

Im Anschluß an das in Fig.1 dargestellte Erfassen oder Nicht-Erfassen von Schwingungsbedingungen für eine Schotterfahrbahn an einem Rad (Schritt 8 oder 9) wird die Fahrsituation einer Schotterfahrbahn vorteilhaft gemäß dem in Fig.2 gezeigten Flußdiagramm festgestellt (Anfangsschritt 10). Dazu wird das ermittelte Schwingungsverhalten der einzelnen Rädern miteinander verglichen. Wurde das Schwingungsverhalten für eine Schotterfahrbahn an mindestens zwei Rädern erkannt (Schritt 11) und liegt der Antriebsschlupf in einem vorgegeben Bereich, d.h. unterhalb eines ersten Grenzwertes (S₁), beispielsweise 50 km/h, (Schritt 12) und oberhalb eines zweiten Grenzwertes (S₂), beispielsweise 0 km/h, (Schritt 13) so schreitet die Abfrage weiter zu Schritt 14. Im Schritt 14 wird gefragt, ob die Fahrzeugreferenzgeschwindigkeit (V_{ref}) unterhalb einer Geschwindigkeitsschwelle (Vₗᵢₘ), beispielsweise unterhalb 80 km/h, liegt. Trifft dies zu, so gilt die Fahrsituation einer Schotterfahrbahn als erfaßt und eine entsprechende Regelungsfunktion der Fahrzeugregelung kann erfolgen. Dies kann beispielsweise eine Erhöhung der Motorregelungsschwelle und/oder der Bremsenregelungsschwelle sein (Schritt 15). In den anderen Fällen, wenn die Bedingungen der Abfragen in den Schritten 11 oder 12 oder 13 oder 14 nicht erfüllt sind, erfolgt eine Rückkehr in das Hauptprogramm der Regelung, beispielsweise einer ASR-Regelung (Schritt 16).

Nach der Erfindung können vorteilhaft sämtliche zuvor dargestellten Schritte durch entsprechende Programmschritte eines Software-Programmes oder durch ein Unterprogramm innerhalb einer Fahrzeugregelung, insbesondere einer Antriebsschlupfregelung (ASR), realisiert werden.

Die Schritte können aber ebenso mit Hilfe einer Schaltungsanordnung realisiert werden. In Fig. 3 ist das Blockschaltbild einer Schaltungsanordnung dargestellt, welche beispielhaft die wesentlichen elektrischen/elektronischen Komponenten einer Ausführungsform zum Erfassen einer Schotterfahrbahn zeigt.

Wesentlich für die Erfindung ist die Erkennungsschaltung (20). Der Erkennungsschaltung (20) ist eine Erfassungschaltung (21) zum Erfassung des Schwingungsverhaltens der einzelnen Räder zugeordnet, deren Ausgang (22) mit einem Eingang (23) einer Auswertungsschaltung (24) zur Auswertung des erfaßten Schwingungsverhaltens verbunden ist. Die Erkennungsschaltung (20) weist einen Integrator (25) und einen Signalerzeuger (26) auf, zur Erzeugung eines Signals, wenn mit Hilfe der Auswertung durch die Auswertungsschaltung (23) über einen durch den Integrator (25) vorbestimmten Zeitraum ein bestimmtes, für eine Schotterfahrbahn typisches Schwingungsverhalten der Räder erkannt wird. Der Erkennungsschaltung (20) ist ferner eine Ermittlungsschaltung (27) zugeordnet, für die Ermittlung einer Fahrzeugreferenzgeschwindigkeit (V_{ref}) anhand gemessener Werte. Ein Ausgang (28) der Ermittlungsschaltung (27) ist mit einem Eingang (29) eines ersten Vergleichers (30) verbunden, der dazu dient, die ermittelte Fahrzeugreferenzgeschwindigkeit (V_{ref}) mit einem vorbestimmten Grenzwert (Vₗᵢₘ) zu vergleichen und welcher erste Vergleicher (30) über einen Ausgang (31) mit einem Eingang (32) der Auswertungsschaltung (23) verbunden ist, die das erfaßte Schwingungsverhalten der einzelnen Räder, insbesondere die Periodendauer einer Schwingung, vergleicht mit vorgegebenen Grenzwerten (T₁,T₂). Die Erkennungsschaltung (20) weist einen zweiten Vergleicher (33) zum Vergleichen der Radbeschleunigung mit einem Radbeschleunigungs-Grenzwert (Bₗᵢₘ), einen dritten Vergleicher (34) zum Vergleichen des Schwingungsverhaltens der einzelnen Räder untereinander, und einen vierten Vergleicher (35) zum Vergleichen des Antriebsschlupfes der Räder mit einem vorgegebenen Grenzwert (S₁,S₂) auf. Der Signalerzeuger (26) ist über einen Ausgang (36) mit einem Eingang (37) einer Einrichtung (38) verbunden, mit deren Hilfe bei einem entsprechenden Signal für die erkannte Fahrsituation einer Schotterfahrbahn einen Eingriff in die Bremsenregelung und/oder Motorregelung vornehmbar ist.

## Patentansprüche

1. Verfahren zur Fahrzeugregelung, bei dem das Drehverhalten der einzelnen Räder gemessen wird und zur Ermittlung der Fahrzeugreferenzgeschwindigkeit, des Radschlupfs, der Radbeschleunigung und anderer Regelgrößen ausgewertet wird, die zur Bemessung und/oder Modulation des Bremsdrucks in den Radbremsen der geregelten Räder und/oder eines Eingriffs in das Motormanagement dienen,
**dadurch gekennzeichnet, daß** zum Erkennen einer Schotterfahrbahn mit einem erhöhten Schlupfbedarf das Schwingungsverhalten mindestens zweier angetriebener Räder erfaßt und ausgewertet wird und daß die Fahrsituation einer Schotterfahrbahn dann als erkannt gilt und/oder eine entsprechende Regelungsfunktion der Fahrzeugregelung nur dann in Funktion gesetzt wird, wenn die Radbeschleunigung an den mindestens zwei angetriebenen Rädern einen vorgegebenen Radbeschleunigungs-Grenzwert (Bₗᵢₘ) übersteigt und wenn die mindestens zwei angetriebenen Räder ein bestimmtes Schwingungsverhalten aufweisen.

2. Verfahren nach Anspruch 1,
**dadurch gekennzeichnet, daß** eine Schotterfahrbahn dann als erkannt gilt und/oder eine entsprechende Regelungsfunktion der Fahrzeugregelung nur dann in Funktion gesetzt wird, wenn die Periodendauer der Schwingungen an mindestens zwei angetriebenen Rädern innerhalb eines vorgegebenen Periodendauer-Bereichs (T₁,T₂) liegt oder wenn die Periodendauer der Schwingungen an mindestens zwei angetriebenen Rädern einen vorgegebenen Grenzwert erreicht.

3. Verfahren nach Anspruch 2,
**dadurch gekennzeichnet,** ein Radbeschleunigungs-Grenzwert (Bₗᵢₘ) in einem Bereich von 1 g bis 2 g, vorzugsweise ca. 1,5 g, vorgegeben wird.

4. Verfahren nach Anspruch 2 oder 3 ,
**dadurch gekennzeichnet, daß** ein Periodendauer-Bereich (T₁,T₂) von 30 msec. (T₂) bis 150 msec. (T₁) oder ein Grenzwert für die Periodendauer von ca. 50 msec. vorgegeben wird.

5. Verfahren nach einem der Ansprüche 1 bis 4,
**dadurch gekennzeichnet, daß** eine Schotterfahrbahn dann als erkannt gilt und/oder eine entsprechende Regelungsfunktion der Fahrzeugregelung nur dann in Funktion gesetzt wird, wenn die angetriebenen Räder einen vorgegebenen Antriebsschlupf aufweisen.

6. Verfahren nach Anspruch 5,
**dadurch gekennzeichnet, daß** ein Antriebsschlupf in einem Bereich von 0 km/h (S₂) bis 50 km/h (S₁) vorgegeben wird.

7. Verfahren nach einem der Ansprüche 1 bis 6,
**dadurch gekennzeichnet, daß** eine Schotterfahrbahn dann als erkannt gilt und/oder eine entsprechende Regelungsfunktion der Fahrzeugregelung nur dann in Funktion gesetzt wird, wenn die berechnete oder geschätzte Fahrzeugreferenzgeschwindigkeit (V_{ref}) einen vorgegebenen Fahrzeuggeschwindigkeits-Grenzwert (Vₗᵢₘ), unterschreitet.

8. Verfahren nach Anspruch 7,
**dadurch gekennzeichnet, daß** ein Fahrzeuggeschwindigkeits-Grenzwert (Vₗᵢₘ) in einem Bereich von 60 km/h bis 100 km/h, vorzugsweise ca. 80 km/h, vorgegeben wird.

9. Verfahren nach einem der Ansprüche 1 bis 8,
**dadurch gekennzeichnet, daß** eine Schotterfahrbahn dann als erkannt gilt und/oder eine entsprechende Regelungsfunktion der Fahrzeugregelung nur dann in Funktion gesetzt wird, wenn bei einem Fahrzeug mit Allradantrieb für die beiden Räder einer Fahrzeugseite und/oder einer Fahrzeugachse die Bedingungen für eine Schotterfahrbahn nach einem der Ansprüche 1 bis 8 erkannt wurden.

10. Verfahren nach einem der Ansprüche 1 bis 8,
**dadurch gekennzeichnet, daß** eine Schotterfahrbahn dann als erkannt gilt und/oder eine entsprechende Regelungsfunktion der Fahrzeugregelung nur dann in Funktion gesetzt wird, wenn bei einem Fahrzeug mit einer angetriebene Achse für beide Räder der angetriebenen Achse die Bedingungen für eine Schotterfahrbahn nach einem der Ansprüche 1 bis 8 erkannt wurden.

11. Verfahren nach einem der Ansprüche 1 bis 10,
**dadurch gekennzeichnet, daß** nach einem Erkennen einer Schotterfahrbahn eine Motorregelungsschwelle und/oder eine Bremsenregelungsschwelle eines Antiblockiersystems (ABS), einer Antriebsschlupfregelung (ASR) oder einer Fahrdynamikregelung (EDS) auf einen vorgegebenen Wert erhöht wird.

12. Verfahren nach Anspruch 11,
**dadurch gekennzeichnet, daß** eine Motorregelungsschwelle in einem Bereich von 2 km/h bis 10 km/h, vorzugsweise ca. 3 km/h, und/oder eine Bremsenregelungsschwelle in einem Bereich von 0 km/h bis 10 km/h, vorzugsweise ca. 3 km/h, vorgegeben wird.

13. Verfahren nach Anspruch 11 oder 12,
**dadurch gekennzeichnet, daß** die Anhebung der Bremsenregelungsschwelle nur dann erfolgt, wenn stark überdrehende Räder erkannt werden.

14. Schaltungsanordnung zur Fahrzeugregelung, wie Antiblockiersystem (ABS), Antriebsschlupfregelung (ASR) oder Fahrdynamikregelung (ESP),
**dadurch gekennzeichnet, daß** diese zum Erkennen einer Schotterfahrbahn mit einem erhöhten Schlupfbedarf eine Erkennungsschaltung (20) aufweist, welcher eine Erfassungschaltung (21) zum Erfassung des Schwingungsverhaltens der einzelnen Räder zugeordnet ist, deren Ausgang (22) mit einem Eingang (23) einer Auswertungsschaltung (24) zur Auswertung des erfaßten Schwingungsverhaltens verbunden ist, und welche Erkennungsschaltung (20) einen Integrator (25) und einen Signalerzeuger (26) aufweist, zur Erzeugung eines Signals, wenn mit Hilfe der Auswertung durch die Auswertungsschaltung (23) über einen durch den Integrator (25) vorbestimmten Zeitraum ein bestimmtes, für eine Schotterfahrbahn typisches Schwingungsverhalten der Räder erkannt wird, und welche Erkennungsschaltung (20) ein Mittel zum Vergleichen der Radbeschleunigung von mindestens zwei angetriebenen Rädern mit einem vorgegebenen Radbeschleunigungs-Grenzwert umfasst.

15. Schaltungsanordnung nach Anspruch 14,
**dadurch gekennzeichnet,**
**daß** der Erkennungsschaltung (20) eine Ermittlungsschaltung (27) zugeordnet ist, für die Ermittlung einer Fahrzeugreferenzgeschwindigkeit anhand gemessener Werte, deren Ausgang (28) mit einem Eingang (29) eines ersten Vergleichers (30) verbunden ist, der dazu dient, die ermittelte Fahrzeugreferenzgeschwindigkeit mit einem vorbestimmten Grenzwert zu vergleichen und welcher erste Vergleicher (30) über einen Ausgang (31) mit einem Eingang (32) der Auswertungsschaltung (23) verbunden ist, die das erfaßte Schwingungsverhalten der einzelnen Räder, insbesondere die Periodendauer einer Schwingung, vergleicht mit vorgegebenen Grenzwerten,
**daß** die Erkennungsschaltung (20) einen zweiten Vergleicher (33) zum Vergleichen der Radbeschleunigung mit einem Radbeschleunigungs-Grenzwert, einen dritten Vergleicher (34) zum Vergleichen des Schwingungsverhaltens der einzelnen Räder untereinander, und einen vierten Vergleicher (35) zum Vergleichen des Antriebsschlupfes der Räder mit einem vorgegebenen Grenzwert aufweist,
und **daß** der Signalerzeuger (26) über einen Ausgang (36) mit einem Eingang (37) mit einer Einrichtung (38) verbunden ist, mit deren Hilfe bei einem entsprechenden Signal für die erkannte Fahrsituation einer Schotterfahrbahn einen Eingriff in die Bremsenregelung und/oder Motorregelung vornehmbar ist.

## Claims

1. A method for controlling a vehicle, wherein the rotation behaviour of the individual wheels is measured and evaluated in order to determine the vehicle reference speed, wheel slip, wheel acceleration and other control values used for proportioning and/or modulating the brake pressure in the wheel brakes of the wheels being controlled and/or for an intervention into the engine management, **characterized in that**, in order to identify a gravel road with a higher slip requirement, the vibration behaviour of at least two driven wheels is detected and evaluated, and **in that** the driving situation of a gravel road is then considered to have been identified and/or a corresponding control function of the vehicle control system is only activated when the wheel acceleration on the at least two driven wheels exceeds a predetermined wheel acceleration limit value (Bₗᵢₘ) and when the at least two driven wheels exhibit a certain vibration behaviour.

2. Method according to Claim 1, **characterized in that** a gravel road is considered to have been identified and/or a corresponding control function of the vehicle control system is only activated when the period of the vibrations on at least two driven wheels lies within a predetermined range (T₁, T₂) or when the period of the vibrations on at least two driven wheels reaches a predetermined limit value.

3. Method according to Claim 2, **characterized in that** a wheel acceleration limit value (Bₗᵢₘ) is predetermined within a range of 1g to 2g, preferably about 1.5g.

4. Method according to Claim 2 or 3, **characterized in that** a period range (T₁, T₂) of 30 msec. (T₂) to 150 msec. (T₁) or a limit value for the period of about 50 msec. is predetermined.

5. Method according to one of Claims 1 to 4, **characterized in that** a gravel road is considered to have been identified and/or a corresponding control function of the vehicle control system is only activated when the driven wheels exhibit a predetermined traction slip.

6. Method according to Claim 5, **characterized in that** a traction slip is predetermined within a range of 0 km/h (S₂) to 50 km/h (S₁) .

7. Method according to one of Claims 1 to 6, **characterized in that** a gravel road is considered to have been identified and/or a corresponding control function of the vehicle control system is only activated when the calculated or estimated vehicle reference speed (V_{ref}) falls below a predetermined vehicle speed limit value (Vₗᵢₘ).

8. Method according to Claim 7, **characterized in that** a vehicle speed limit value (Vₗᵢₘ) is predetermined within a range of 60 km/h to 100 km/h, preferably about 80 km/h.

9. Method according to one of Claims 1 to 8, **characterized in that** a gravel road is considered to have been identified and/or a corresponding control function of the vehicle control system is only activated when the conditions for a gravel road according to Claims 1 to 8 were identified in a vehicle with all-wheel drive on both wheels of one side of the vehicle and/or a vehicle axle.

10. Method according to one of Claims 1 to 8, **characterized in that** a gravel road is considered to have been identified and/or a corresponding control function of the vehicle control system is only activated when the conditions for a gravel road according to Claims 1 to 8 were identified in a vehicle with one driven axle for both wheels on the driven axle.

11. Method according to one of Claims 1 to 10, **characterized in that** an engine control threshold and/or brake control threshold of an anti-lock system (ABS), a traction slip control system (TCS) or driving-dynamics control system (EDS) is increased to a predetermined value after a gravel road has been identified.

12. Method according to Claim 11, **characterized in that** an engine control threshold is predefined in a range of 2 km/h to 10 km/h, preferably about 3 km/h, and/or a brake control threshold is predefined in a range of 0 km/h to 10 km/h, preferably about 3 km/h.

13. Method according to Claim 11 or 12, **characterized in that** the brake control threshold is raised only when highly overspeeding wheels are detected.

14. Circuit arrangement for controlling a vehicle, such as an anti-lock system (ABS), traction slip control system (TCS) or driving-dynamics control system (ESP), **characterized in that** such circuit exhibits an identification circuit (20) to identify a gravel road with higher slip requirement, wherein a detection circuit (21) for detecting the vibration behaviour of the individual wheels is associated with the identification circuit (20), and the output (22) of the detection circuit (21) is connected to an input (23) of an evaluation circuit (24) for evaluating the detected vibration behaviour, and the identification circuit (20) exhibits an integrator (25) and a signal generator (26) for generating a signal when a certain vibration behaviour typical of gravel roads is detected on the wheels over a period of time predefined by the integrator (25) with the help of the evaluation of the evaluation circuit (23), and which identification circuit (20) comprises a means for comparing the wheel acceleration of at least two driven wheels with a predetermined wheel acceleration limit value.

15. Circuit arrangement according to Claim 14, **characterized in that** a calculating circuit (27) is associated with the identification circuit (20), which calculates the vehicle reference speed on the basis of measured values and whose output (28) is connected to an input (29) of a first comparator (30) which is used for comparing the calculated vehicle reference speed with a predetermined limit value and is connected by way of an output (31) to an input (32) of the evaluation circuit (23) which compares the detected vibration behaviour of the individual wheels, in particular the period of a vibration, with predetermined limit values; **in that** the identification circuit (20) exhibits a second comparator (33) for comparing the wheel acceleration with a wheel acceleration limit value, a third comparator (34) for comparing the vibration behaviour of the individual wheels to one another, and a fourth comparator (35) for comparing the traction slip of the wheels with a predetermined limit value; and **in that** the signal generator (26) is connected by way of an output (36) to an input (37) of a device (38) used for intervening in the brake control and/or engine control when an appropriate signal for the identified driving situation on a gravel road is emitted.

## Revendications

1. Procédé de régulation de véhicule dans lequel le comportement en rotation des différentes roues est mesuré et est évalué pour déterminer la vitesse de référence du véhicule, le patinage de roue, l'accélération de roue et d'autres grandeurs de régulation, qui servent à dimensionner et/ou à moduler la pression de freinage dans les freins de roue des roues régulées et/ou une intervention dans la gestion du moteur,
**caractérisé en ce que** pour reconnaître une chaussée caillouteuse avec un plus grand besoin de patinage, le comportement en oscillation d'au moins deux roues motrices est détecté et évalué et **en ce que** la situation de conduite d'une chaussée caillouteuse est considérée alors comme reconnue et/ou une fonction de régulation correspondante de la régulation du véhicule n'est mise en fonction que si l'accélération de roue sur au moins deux roues motrices dépasse une valeur limite d'accélération de roue (Bₗᵢₘ) prédéfinie et si les au moins deux roues motrices présentent un comportement en oscillation déterminé.

2. Procédé selon la revendication 1,
**caractérisé en ce qu'**une chaussée caillouteuse est considérée comme reconnue et/ou une fonction de régulation correspondante de la régulation du véhicule n'est mise en fonction que si la durée de période des oscillations sur au moins deux roues motrices se situe à l'intérieur d'une plage de durée de période (T1, T2) prédéfinie ou si la durée de période des oscillations sur au moins deux roues motrices atteint une valeur limite prédéfinie.

3. Procédé selon la revendication 2,
**caractérisé en ce qu'**une valeur limite d'accélération de roue (Bₗᵢₘ) est prédéfinie dans une plage comprise entre 1 g et 2 g, de préférence égale à environ 1,5 g.

4. Procédé selon la revendication 2 ou 3,
**caractérisé en ce qu'**une plage de durée de période (T1, T2) de 30 ms (T2) à 150 ms (T1) ou une valeur limite pour la durée de période d'environ 50 ms est prédéfinie.

5. Procédé selon l'une des revendications 1 à 4,
**caractérisé en ce qu'**une chaussée caillouteuse est considérée comme reconnue et/ou une fonction de régulation correspondante de la régulation du véhicule n'est mise en fonction que si les roues motrices présentent un patinage à l'accélération prédéfini.

6. Procédé selon la revendication 5,
**caractérisé en ce qu'**un patinage à l'accélération est prédéfini dans une plage comprise entre 0 km/h (S2) à 50 km/h (S1).

7. Procédé selon l'une des revendications 1 à 6,
**caractérisé en ce qu'**une chaussée caillouteuse est considérée comme reconnue et/ou une fonction de régulation correspondante de la régulation du véhicule n'est mise en fonction que si la vitesse de référence du véhicule (V_{ref}) calculée ou estimée passe au dessus d'une valeur limite de vitesse de véhicule (Vₗᵢₘ) prédéfinie.

8. Procédé selon la revendication 7,
**caractérisé en ce qu'**une valeur limite de vitesse dé véhicule (Vₗᵢₘ) est prédéfinie dans une plage comprise entre 60 km/h et 100 km/h, de préférence égale à environ 80 km/h.

9. Procédé selon l'une des revendications 1 à 8,
**caractérisé en ce qu'**une chaussée caillouteuse est considérée comme reconnue et/ou une fonction de régulation correspondante de la régulation du véhicule n'est mise en fonction que si, dans le cas d'un véhicule à quatre roues motrices, pour les deux roues d'un côté du véhicule et/ou un essieu du véhicule, les conditions pour une chaussée caillouteuse selon l'une des revendications 1 à 8 ont été reconnues.

10. Procédé selon l'une des revendications 1 à 8,
**caractérisé en ce qu'**une chaussée caillouteuse est considérée comme reconnue et/ou une fonction de régulation correspondante de la régulation du véhicule n'est mise en fonction que si, dans le cas d'un véhicule avec un essieu moteur, pour les deux roues de l'essieu moteur les conditions pour une chaussée caillouteuse selon l'une des revendications 1 à 8 ont été reconnues.

11. Procédé selon l'une des revendications 1 à 10,
**caractérisé en ce qu'**après reconnaissance d'une chaussée caillouteuse, un seuil de régulation du moteur et/ou un seuil de régulation des freins d'un système d'antiblocage (ABS), d'une régulation du patinage à l'accélération (ASR) ou d'une régulation de la dynamique de conduite (EDS) est augmenté à une valeur prédéfinie.

12. Procédé selon la revendication 11,
**caractérisé en ce qu'**un seuil de régulation du moteur est prédéfini dans une plage comprise entre 2 km/h et 10 km/h, de préférence égale à 3 km/h, et/ou un seuil de régulation des freins est prédéfini dans une plage comprise entre 0 km/h et 10 km/h, de préférence égal à 3 km/h.

13. Procédé selon la revendication 11 ou 12,
**caractérisé en ce que** le relèvement du seuil de régulation des freins ne s'effectue que s'il a été reconnu que les roues tournent à trop grande vitesse.

14. Agencement de circuits pour la régulation de véhicule, telle qu'un système d'antiblocage (ABS), une régulation du patinage à l'accélération (ASR) ou une régulation de la dynamique de conduite (ESP),
**caractérisé en ce que** celui-ci comporte, pour reconnaître une chaussée caillouteuse avec un plus grand besoin de patinage, un circuit de reconnaissance (20) auquel est associé un circuit de détection (21) pour détecter le comportement en oscillation des différentes roues, dont la sortie (22) est reliée à une entrée (23) d'un circuit d'évaluation (24) pour l'évaluation du comportement en oscillation détecté, et lequel circuit de reconnaissance (20) comporte un intégrateur (25) et un générateur de signaux (26) pour produire un signal lorsqu'un comportement en oscillation des roues, déterminé, caractéristique d'une chaussée caillouteuse, est reconnu à l'aide de l'évaluation par le circuit d'évaluation (23) pendant un intervalle de temps prédéterminé par l'intégrateur (25), et lequel circuit de reconnaissance (20) comprend un moyen pour comparer l'accélération de roue d'au moins deux roues motrices à une valeur limite d'accélération de roue prédéfinie.

15. Agencement de circuits selon la revendication 14,
**caractérisé**
**en ce qu'**au circuit de reconnaissance (20) est associé un circuit de détermination (27) pour la détermination d'une vitesse de référence de véhicule à l'aide de valeurs mesurées, dont la sortie (28) est reliée à une entrée (29) d'un premier comparateur (30) qui sert à comparer la vitesse de référence de véhicule déterminée à une valeur limite prédéterminée, et lequel premier comparateur (30) est relié par une sortie (31) à une entrée (32) du circuit d'évaluation (23) qui compare le comportement en oscillation détecté des différentes roues, en particulier la durée de période d'une oscillation, à des valeurs limites prédéfinies,
**en ce que** le circuit de reconnaissance (20) comporte un deuxième comparateur (33) pour comparer l'accélération de roue à une valeur limite d'accélération de roue, un troisième comparateur (34) pour comparer le comportement en oscillation des différentes roues entre elles, et un quatrième comparateur (35) pour comparer le patinage à l'accélération des roues à une valeur limite prédéfinie,
et **en ce que** le générateur de signaux (26) est relié, par une sortie (36), à une entrée (37) d'un dispositif (38) à l'aide duquel une intervention dans la régulation des freins et/ou la régulation du moteur peut être entreprise, dans le cas d'un signal correspondant pour la situation de conduite reconnue d'une chaussée caillouteuse.
